# EUROPÄISCHE PATENTSCHRIFT

(11) **EP 0 931 064 B1**
(45) Veröffentlichungstag und Bekanntmachung des Hinweises auf die Patenterteilung: **27.11.2002**
(21) Anmeldenummer: 97941997.5
(22) Anmeldetag: 09.09.1997
(51) Int. Cl.: C07D 211/94, C08K 5/3435

(54) **STABILISIERTE MONOMERENZUSAMMENSETZUNG**
STABILISED MONOMER COMPOSITION
COMPOSITION DE MONOMERES STABILISEE

(30) Priorität: 23.09.1996 DE 19638868
(43) Veröffentlichungstag der Anmeldung: 28.07.1999
(73) Patentinhaber: BASF AKTIENGESELLSCHAFT, 67056 Ludwigshafen (DE)
(72) Erfinder: SUTORIS, Heinz, Friedrich, D-67227 Frankenthal (DE); KOCH, Andreas, D-67240 Bobenheim-Roxheim (DE); AUMÜLLER, Alexander, D-67435 Neustadt (DE); DUPUIS, Jacques, D-67069 Ludwigshafen (DE); NIESSNER, Manfred, D-67105 Schifferstadt (DE)
(86) Internationale Anmeldenummer: EP9704893
(87) Internationale Veröffentlichungsnummer: WO98013346

(56) Entgegenhaltungen:
- EP-A- 0 574 666
- EP-A- 0 574 667
- EP-A- 0 636 610
- EP-A- 0 665 233
- EP-A- 0 885 180
- WO-A-97/32833
- DE-A- 4 328 950
- DE-A- 19 534 432
- US-A- 5 254 760
- US-A- 5 396 005
- CHEMICAL ABSTRACTS, vol. 80, no. 22, 3.Juni 1974 Columbus, Ohio, US; abstract no. 121668, SHAPIRO A.B. ET AL.: "Antioxidative and light-protective properties of piperidinooxy stable radicals and sterically hindered piperidines" XP002051246 & VYSOKOMOL. SOEDIN., SER. A, Bd. 15, Nr. 12, 1973, Seiten 2673-2680,
- CHEMICAL ABSTRACTS, vol. 112, no. 13, 26.März 1990 Columbus, Ohio, US; abstract no. 117966, BOLOTIN A.B. ET AL.: "Quantum-chemical analysis of the mechanism of action of sterically hindered amines in photostabilization of polyolefins" XP002051247 & TEOR. EKSP. KHIM., Bd. 25, Nr. 5, 1989, Seiten 594-597,
- CHEMICAL ABSTRACTS, vol. 111, no. 20, 13.November 1989 Columbus, Ohio, US; abstract no. 175290, BOLOTIN A. ET AL.: "Theoretical investigation of the hindered amine photostabilizing mechanism" XP002051248 & THEOCHEM, Bd. 56, 1989, Seiten 291-296,
- KROENER M. ET AL: 'N-Vinylformamide ...' PRAKT. CHEM. Bd. 342, Nr. 2, 2000, Seiten 115 - 131
- CRC Handbook of Chemistry and Physics, 80th ed., CRC Press, Boca Raton, 1999-2000, pages 8-44 to 8-56.
- MARDARE D.; MATYJASZEWSKI K.: 'Thermal Polymerization of Styrene ...' POLYMER PREPRINTS Bd. 35, Nr. 1, 1994, Seiten 778 - 779

## Beschreibung

Gegenstand der vorliegenden Erfindung sind Monomerenzusammensetzungen, enthaltend
A) als Monomere N-Vinylformamid, N-Vinylpyrrolidon, N-Vinylcaprolactam, C₁-C₄-Alkylvinylether oder Vinylchlorid, und
B) eine Verbindung oder eine Mischung von Verbindungen der allgemeinen Formel II 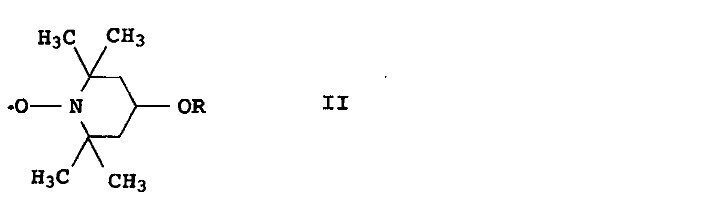
wobei
R Methyl, Ethyl, Isopropyl, n-Propyl, n-Butyl, Isobutyl, sec.-Butyl, tert.-Butyl oder Trimethylsilyl bedeutet.

Weiterhin betrifft die Erfindung ein Verfahren zur Inhibierung der vorzeitigen Polymerisation der genannten Monomeren sowie die Verwendung von N-Oxyl-Verbindungen der Formel II als Stabilisatoren gegen die vorzeitige Polymerisation der genannten Monomeren.

zur Verhinderung vorzeitiger Polymerisation ist es erforderlich, den Monomeren Stabilisatoren zuzusetzen. Als besonders geeignet zur Verhinderung radikalischer Polymerisationen haben sich sterisch gehinderte Amine wie 2,2,6,6-Tetraalkylpiperidin und deren Derivate, darunter auch die N-Oxylderivate, erwiesen.

In US-A 5 254 760 wird die Stabilisierung von vinylaromatischen Verbindungen wie Styrol während der Destillation und Reinigung durch eine Kombination von mindestens einer Nitroxylverbindung und mindestens einer aromatischen Nitroverbindung beschrieben. Dabei besteht die Gefahr, daß Spuren der Nitroxylverbindungen in das gereinigte Monomere gelangen. Schon Spuren von Nitroxylverbindungen stören jedoch die anschließende Polymerisation; sie bewirken eine verzögerte Polymerisation und unkontrollierte Kettenabbrüche, was zu Polymeren mangelhafter Reproduzierbarkeit und kurzer Kettenlänge führt. Diese nachteiligen Effekte werden von Mardare et al in Polym. Prep. (Am. Chem. Soc., Div. Polym. Sci.) 35 (1), 778 (1994) beschrieben.

Zur Stabilisierung von heterosubstituierten Vinylverbindungen wie N-Vinylformamid oder N-Vinylpyrrolidon wurden bei der Destillation und Reinigung bisher beispielsweise Derivate des Phenylendiamins (US-5 396 005), Fullerene (DE-A 44 14 773) oder 2,6-Ditert.-butyl-p-kresol (DE-A 43 28 950) eingesetzt. Diese Stabilisatoren lassen jedoch hinsichtlich ihrer Wirksamkeit noch zu wünschen übrig.

Aufgabe der vorliegenden Erfindung war es daher, Monomerenzusammensetzungen zu finden, welche heterosubstituierte Vinylverbindungen und geeignete Stabilisatoren enthalten, die eine verbesserte Stabilisierung gegen vorzeitige Polymerisation zeigen, und die sich auf die nachfolgende gezielte Polymerisation der Monomeren kaum nachteilig auswirken.

Demgemäß wurden die eingangs genannten Monomerenzusammensetzungen gefunden.

Die C₁-C₄-Alkylvinylether enthalten als C₁-C₄-Alkylgruppe Methyl, Ethyl, n-Propyl, iso-Propyl, n-Butyl, iso-Butyl, sec-Butyl oder tert-Butyl.

Besonders bevorzugt unter den genannten Monomeren ist N-Vinylformamid.

Als Stabilisatoren (B) in den erfindungsgemäßen Monomerenzusammensetzungen setzt man Verbindungen oder Mischungen von Verbindungen der allgemeinen Formel II ein 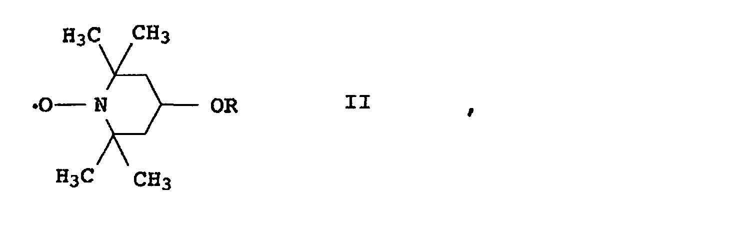 worin R Methyl, Ethyl, Isopropyl, n-Propyl, n-Butyl, Isobutyl, sec.-Butyl, tert.-Butyl oder Trimethylsilyl bedeutet. Die Stabilisatoren der Formel II sind besonders für Monomerenzusammensetzungen geeignet, die durch Destillation gereinigt werden sollen.

Die Nitroxylverbindungen lassen sich aus den entsprechenden Piperidinverbindungen durch Oxidation z.B. mit Wasserstoffperoxid herstellen. Details zu dieser Oxidation sind z.B. in der Schrift WO 96/29311 genannt. Die Piperidinverbindungen und ihre Herstellung sind allgemein bekannt. Da die Oxidationsreaktionen nicht immer vollständig ablaufen, können auch die als Ausgangsverbindungen dienenden Piperidinverbindungen sowie teilweise oxidierte Zwischenstufen in den erfindungsgemäßen Monomerenzusammensetzungen enthalten sein.

Besonders geeignete Monomerenzusammensetzungen sind solche, die neben den erwähnten Nitroxylverbindungen zur Stabilisierung zusätzlich eine oder mehrere aromatische Nitroso- oder Nitroverbindungen enthalten.

Als aromatische Nitroverbindungen können beispielsweise 1,3-Dinitrobenzol, 1,4-Dinitrobenzol, 2,6-Dinitro-4-methylphenol, 2-Nitro-4-methylphenol, 2,4,6-Trinitrophenol, 2,4-Dinitro-1-naphthol, 2,4-Dinitro-6-methylphenol, 2,4-Dinitrochlorbenzol, 2,4-Dinitrophenol, 2,4-Dinitro-6-sec-butylphenol, 4-Cyano-2-nitrophenol, 3-Iodo-4-cyano-5-nitrophenol, besonders bevorzugt 2,6-Dinitro-4-methylphenol, 2-Nitro-4-methylphenol, 2,4-Dinitro-6-sec-butylphenol bzw. 2,4-Dinitro-6-methylphenol verwendet werden.

Als aromatische Nitrosoverbindungen kommen z.B. p-Nitrosophenol, p-Nitroso-o-kresol und p-Nitroso-N,N'-diethylanilin in Betracht.

Weiterhin können den Monomerenzusammensetzungen als Costabilisatoren auch substituierte Phenole zugesetzt werden, wie beispielsweise die folgenden:
4-tert-Butylbrenzcatechin, Methoxyhydrochinon, 2,6-Di-tert-butyl-4-methylphenol, n-Octadecyl-β-(3,5-di-tert-butyl-4-hydroxyphenyl)-propionat, 1,1,3-Tris-(2-methyl-4-hydroxy-5-tert-butylphenyl)-butan, 1,3,5-Trimethyl-2,4,6-tris-(3,5-di-tert-butyl-4-hydroxybenzyl)-benzol,
1,3,5-Tris-(3,5-di-tert-butyl-4-hydroxybenzyl)-isocyanurat,
1,3,5-Tris-[β-(3,5-di-tert-butyl-4-hydroxyphenyl)-propionyloxyethyl]-isocyanurat, 1,3,5-Tris-(2,6-dimethyl-3-hydroxy-4-tertbutylbenzyl)-isocyanurat und Pentaerythrit-tetrakis-[β-(3,5-ditert-butyl-4-hydroxy-phenyl)-propionat].

Weiterhin können die erfindungsgemäßen Monomerenzusammensetzungen auch einen oder mehrere Costabilisatoren aus der Gruppe der Phenothiazine, Chinone, Hydrochinone und deren Ether oder Phenylendiamine enthalten.

Zur Stabilisierung der erfindungsgemäßen Monomerenzusammensetzungen enthalten diese Zusammensetzungen im allgemeinen 0,0002 bis 5, vorzugsweise 0,0005 bis 0,5 Gew.-% der Nitroxylverbindungen, bezogen auf die Gesamtmenge der Monomerenzusammensetzung.

Die Stabilisatoren zeigen ihre stabilisierende Wirkung in einem breiten Temperaturbereich. Sie sind bei jeder üblichen Lagertemperatur von -50 bis +50°C wirksam und ebenso bei erhöhten Temperaturen, wie sie beispielsweise bei der Destillation der Monomeren angewendet werden. Auch der Druckbereich des Stabilisierungsverfahrens ist unkritisch. Die Stabilisatoren wirken bei Normaldruck und auch bei vermindertem Druck, wie er teilweise bei Destillationsprozessen angewendet wird.

Das erfindungsgemäße Verfahren zur Inhibierung der vorzeitigen Polymerisation der genannten Monomeren findet seinen Einsatz während der Herstellung, der Destillation oder Reinigung der Monomeren sowie auch bei ihrer Lagerung und beim Transport. Dabei ist besonders bei der Destillation der Einsatz von N-Oxylverbindungen der Formel II geeignet.

## Patentansprüche

1. Monomerenzusammensetzung enthaltend
A) als Monomere N-Vinylformamid, N-Vinylpyrrolidon, N-Vinylcaprolactaa, C₁-C₄-Alkylvinylether oder Vinylchlorid, und
B) eine Verbindung oder eine Mischung von Verbindungen der allgemeinen Formel II 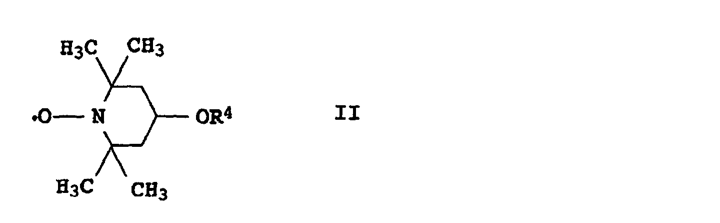
wobei
R⁴ Methyl, Ethyl, Isopropyl, n-Propyl, n-Butyl, Isobutyl, sec.-Butyl, tert.-Butyl oder Trimethylsilyl bedeutet.

2. Monomerenzusammensetzung nach Anspruch 1, enthaltend als Monomeres N-Vinylformamid.

3. Monomerenzusammensetzung nach Anspruch 1 oder 2, welche zusätzlich eine oder mehrere aromatische Nitroso- oder Nitroverbindungen enthält.

4. Monomerenzusammensetzung nach den Ansprüchen 1 bis 3, welche zusätzlich einen oder mehrere Costabilisatoren aus der Gruppe der Phenothiazine, Chinone, Hydrochinone und deren Ether oder Phenylendiamine enthält.

5. Verfahren zur Inhibierung der vorzeitigen Polymerisation von Monomeren gemäß Anspruch 1, **dadurch gekennzeichnet, daß** man den Monomeren gemäß Anspruch 1 mindestens eine N-Oxylverbindung der Formel II in einer als Stabilisator wirksamen Menge zusetzt.

6. Verfahren nach Anspruch 5, **dadurch gekennzeichnet, daß** das zu stabilisierende Monomere N-Vinylformamid ist.

7. Verwendung von Verbindungen der Formel II gemäß Anspruch 1 zur Stabilisierung von N-Vinylformamid, N-Vinylpyrrolidon, N-Vinylcaprolactam, C₁-C₄-Alkylvinylether oder Vinylchlorid gegen vorzeitige Polymerisation.

## Claims

1. A monomer composition containing
A) N-vinylformamide, N-vinylpyrrolidone, N-vinylcaprolactam, C₁-C₄-alkyl vinyl ether or vinyl chloride as monomers, and
B) a compound or a mixture of compounds of the formula II 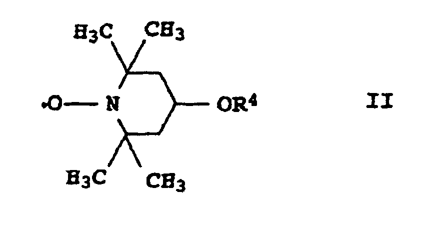
where
R⁴ is methyl, ethyl, isopropyl, n-propyl, n-butyl, isobutyl, sec-butyl, tert-butyl or trimethylsilyl.

2. A monomer composition as claimed in claim 1, containing N-vinylformamide as a monomer.

3. A monomer composition as claimed in claim 1 or 2, which additionally contains one or more aromatic nitroso or nitro compounds.

4. A monomer composition as claimed in any of claims 1 to 3, which additionally contains one or more costabilizers from the group consisting of the phenothiazines, quinones, hydroquinones and their ethers or phenylenediamines.

5. A process for inhibiting the premature polymerization of monomers as claimed in claim 1, wherein at least one N-oxyl compound of the formula II is added, in an amount effective as a stabilizer, to the monomers as claimed in claim 1.

6. A process as claimed in claim 5, wherein the monomer to be stabilized is N-vinylformamide.

7. The use of a compound of the formula II as claimed in claim 1 for stabilizing N-vinylformamide, N-vinylpyrrolidone, N-vinylcaprolactam, C₁-C₄-alkyl vinyl ether or vinyl chloride against premature polymerization.

## Revendications

1. Composition de monomères contenant
A) en tant que monomères, du N-vinylformamide, de la N-vinylpyrrolidone, du N-vinylcaprolactame, un oxyde d'alkyle en C₁-C₄ et de vinyle ou du chlorure de vinyle, et
B) un composé ou un mélange de composés de formule générale II 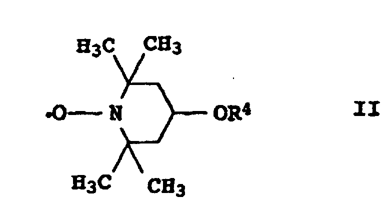
dans laquelle
R⁴ est un groupe méthyle, éthyle, isopropyle, n-propyle, n-butyle, isobutyle, sec-butyle, tert-butyle ou triméthylsilyle.

2. Composition de monomères selon la revendication 1, qui en tant que monomère contient du N-vinylformamide.

3. Composition de monomères selon la revendication 1 ou 2, qui contient en outre un ou plusieurs composés nitrosés ou nitrés aromatiques.

4. Composition de monomères selon les revendications 1 à 3, qui contient en outre un ou plusieurs co-stabilisants choisis dans l'ensemble comprenant les phénothiazines, les quinones, les hydroquinones et leurs éthers, ou des phénylènediamines.

5. Procédé pour inhiber la polymérisation prématurée de monomères selon la revendication 1, **caractérisé en ce qu'**on ajoute aux monomères selon la revendication 1 au moins un composé N-oxylé de formule II en une quantité à activité de stabilisation.

6. Procédé selon la revendication 5, **caractérisé en ce que** le monomère à stabiliser est le N-vinylformamide.

7. Utilisation de composés de formule II selon la revendication 1 pour stabiliser vis-à-vis d'une polymérisation prématurée le N-vinylformamide, la N-vinylpyrrolidone, le N-vinylcaprolactame, les oxydes d'alkyle en C₁-C₄ et de vinyle ou le chlorure de vinyle.
